# DEMANDE DE BREVET EUROPEEN

(11) **EP 4 112 997 A1**
(43) Date de publication de la demande: **04.01.2023**
(21) Numéro de dépôt: 22181158.1
(22) Date de dépôt: 27.06.2022
(51) Int. Cl.: F21L 4/00, F21V 23/04, F21V 31/00

(54) **BLOC LUMINEUX À PALETTE DE COMMANDE AVANT**

(30) Priorité: 01.07.2021 FR 2107166
(71) Demandeur: Stoots, 71170 Coublanc (FR)
(72) Inventeur: DESSEREE, DESSEREE, 71170 COUBLANC (FR)
(74) Mandataire: INNOV-GROUP

(57) **Abrégé**

L'invention concerne un bloc lumineux (4) pour dispositif lumineux (5) d'une lampe, comprenant :
Un boîtier (40) étanche comprenant une partie transparente (440),
Une source lumineuse logée dans le boîtier et agencée pour émettre un signal lumineux à travers ladite partie transparente (440) dudit boîtier,
Un circuit de contrôle de la source lumineuse, logé dans le boîtier et comprenant au moins un bouton de commande (431) de la source lumineuse,
Caractérisé en ce que :
Le boîtier (40) comporte au moins un orifice (445) traversé par ledit bouton de commande (431),
Le bloc lumineux (4) comporte une palette de commande (46) fixée audit boîtier (40), actionnable en mouvement entre deux positions et coopérant avec ledit bouton de commande (431) pour l'actionner dans au moins l'une de ses deux positions.

## Description

### Domaine technique de l'invention

La présente invention se rapporte à un bloc lumineux à palette de commande avant, pouvant être employé dans un dispositif lumineux notamment un dispositif lumineux d'une lampe, par exemple une lampe frontale, une lampe pour vélo ou une lampe de casque.

### Etat de la technique

Des lampes frontales ont déjà été décrites dans les demandes de brevets EP3145280A1**,** EP2706823A1**,** US2008/316733A1 et US2010/214766A1**.**

De manière connue, une lampe frontale est composée de deux éléments principaux, une sangle et un dispositif lumineux solidaire de la sangle. La sangle est positionnée autour de la tête de l'individu et comporte des moyens de réglage pour s'ajuster à la taille de son tour de tête. Le dispositif lumineux est positionné sur l'avant. Il peut comporter un bloc lumineux, éventuellement une batterie intégrée au bloc lumineux ou déportée, un circuit électronique de contrôle et une source lumineuse, souvent composée d'une ou plusieurs diodes électroluminescentes.

Le dispositif lumineux peut parfois être amovible par rapport à la sangle.

En général, son bloc lumineux est composé d'un boîtier étanche, pouvant renfermer ou supporter la batterie, logeant une carte électronique de contrôle et portant un bloc optique comportant au moins une lentille pour adapter le faisceau lumineux fourni par les diodes électroluminescentes. Un ou plusieurs boutons positionnés sur le boîtier permettent de contrôler la lampe et par exemple de régler l'intensité et la forme du faisceau.

Sur les blocs lumineux classiques, les boutons sont souvent petits et difficiles à manipuler, notamment avec des gants. La commande est rendue plus difficile lorsque le dispositif lumineux est celui d'une lampe frontale, où l'utilisateur doit commander sa lampe "à l'aveugle", c'est-à-dire en actionnant chaque bouton alors qu'il a déjà la lampe sur le front. La commande du bloc lumineux est donc souvent peu ergonomique.

Le document US2011/058360A1 décrit un bloc lumineux doté d'un capot en caoutchouc comprenant une portion flexible permettant d'agir sur un bouton situé au-dessous. Cette solution n'est pas optimale quand il s'agit de commander la lampe à l'aveugle.

Il existe cependant toujours un besoin de proposer un bloc lumineux ayant une solution de commande ergonomique permettant un contrôle facile et intuitif, même "à l'aveugle".

### Exposé de l'invention

Ce but est atteint par un bloc lumineux pour dispositif lumineux d'une lampe, comprenant :
- Un boîtier étanche comprenant une façade avant présentant une partie transparente,
- Une source lumineuse logée dans le boîtier et agencée pour émettre un signal lumineux à travers ladite partie transparente dudit boîtier,
- Un circuit de contrôle de la source lumineuse, logé dans le boîtier et comprenant au moins un bouton de commande de la source lumineuse,
- Le boîtier comportant au moins un orifice réalisé sur sa façade avant et traversé par ledit bouton de commande,
- Le bloc lumineux comportant une palette de commande fixée audit boîtier, actionnable en mouvement entre deux positions et coopérant avec ledit bouton de commande pour l'actionner dans au moins l'une de ses deux positions,
- La palette de commande comportant au moins une plaque qui s'étend suivant une direction dite longitudinale entre une zone de fixation sur ledit bloc lumineux et une partie de commande libre en flexion éloignée de sa zone de fixation et positionnée en vis-à-vis dudit bouton de commande.

Selon une particularité, ladite plaque comporte une ouverture délimitée par un contour fermé formant une lunette positionnée à l'avant du bloc lumineux, ledit contour fermé étant agencé autour de ladite partie transparente du boîtier pour laisser passer le signal lumineux.

Dans l'invention, l'utilisation d'une palette de commande montée en flexion à une première extrémité et libre à sa deuxième extrémité permet de dégager une zone centrale pour laisser passer la lumière. La pièce formant la palette de commande présente ainsi une double-fonction de commande et de "lunette" pour le bloc optique. Ce n'est pas le cas de la solution décrite dans le document antérieur US2011/058360A1**.**

Par ailleurs, selon un aspect particulier de l'invention, la palette est réalisée sous la forme d'une plaque rigide, ce qui permet de transférer la force d'appui au bouton sans nécessiter un appui précis à l'aplomb du bouton. Ce n'est pas le cas de la solution du document US2011/058360A1 qui utilise une partie souple en élastomère. Ainsi la solution de l'invention permet de créer une interface de commande à surface de commande étendue et très ergonomique tout en ayant électroniquement un bouton de commande de petite taille.

La solution de l'invention permet ainsi d'utiliser un bouton de commande ayant une architecture compacte, tout en disposant d'une zone d'appui/commande large et éventuellement déportée par rapport au bouton de commande. L'ergonomie est ainsi grandement améliorée.

Enfin, avec un bouton de commande présent en façade du bloc lumineux, celui-ci peut être placé sur la même face de la carte électronique que les autres composants de la carte. La production de la carte électronique s'avère ainsi simplifiée et l'étanchéité du bloc lumineux est plus facile à réaliser que dans les solutions où les boutons de commande sont situés sur la tranche du boîtier.

Selon une particularité, ladite palette de commande est actionnable en flexion de manière monostable entre ses deux positions autour d'une zone de fixation audit boîtier.

Selon une autre particularité, le bouton de commande est un bouton poussoir à rappel.

Selon une autre particularité, le bloc lumineux comporte un dispositif de verrouillage de ladite palette de commande.

Selon une autre particularité, le dispositif de verrouillage comporte un loquet mobile entre une position de déverrouillage du mouvement de la palette de commande et une position de verrouillage du mouvement de la palette de commande.

Selon une autre particularité, le boîtier comporte un socle arrière et un bloc optique portant ladite partie transparente et fixé audit socle arrière pour refermer ledit boîtier, un joint d'étanchéité étant agencé entre ledit socle arrière et ledit bloc optique.

Selon une autre particularité, le circuit de contrôle est réalisé sur une carte électronique logée dans ledit boîtier.

Selon une autre particularité, la source lumineuse comporte une ou plusieurs diodes électroluminescentes montées sur ladite carte électronique.

L'invention concerne également un dispositif lumineux comprenant un bloc batterie sur lequel vient se connecter une batterie, ledit dispositif comportant un bloc lumineux tel que défini ci-dessus et des moyens de fixation dudit bloc batterie sur ledit bloc lumineux.

Selon une particularité, les moyens de fixation du bloc batterie comportent un bras fixé au boîtier dudit bloc lumineux, ledit bras portant un logement d'accueil pour le bloc batterie.

Selon une autre particularité, le logement d'accueil comporte un filetage interne et en ce qu'une enveloppe du bloc batterie comporte un filetage externe agencé pour assurer un vissage de l'enveloppe sur le bras.

L'invention concerne une lampe frontale comportant une sangle destinée à être placée autour de la tête d'un individu et un support agencé sur ladite sangle et configuré pour accueillir un dispositif lumineux tel que défini ci-dessus.

Selon une particularité, le support comporte des moyens de fixation par emboîtement ou par coulissement agencés pour coopérer avec l'enveloppe du bloc batterie.

L'invention concerne également une lampe pour vélo, comprenant un support agencé pour se fixer sur le cintre d'un vélo et destiné à recevoir un dispositif lumineux, tel que défini ci-dessus.

L'invention concerne enfin une lampe de casque comportant un support agencé pour se fixer sur un casque et destinée à recevoir un dispositif lumineux tel que défini ci-dessus.

### Brève description des figures

D'autres caractéristiques et avantages vont apparaître dans la description détaillée qui suit faite en regard des dessins annexés dans lesquels :
- La figure 1 illustre le principe de positionnement d'une lampe frontale sur la tête d'un individu ;
- La figure 2 représente, vu en perspective, le dispositif lumineux conforme à l'invention ;
- La figure 3 représente, vu en éclaté, le bloc lumineux conforme à l'invention ;
- La figure 4 illustre, par une vue en éclaté, le principe de fixation de la palette de commande du bloc lumineux de l'invention et de son dispositif de verrouillage ;
- Les figures 5A et 5B illustrent le principe de fonctionnement du dispositif de verrouillage de la palette de commande du bloc lumineux conforme à l'invention ;
- La figure 6 montre une sangle de support d'une lampe frontale, capable d'accueillir le dispositif lumineux conforme à l'invention ;
- Les figures 7A à 7C montrent, en vue de dessus, plusieurs exemples de réalisation de la palette de commande ;

### Description détaillée d'au moins un mode de réalisation

L'invention concerne un bloc lumineux 4 et un dispositif lumineux 5 qui comporte notamment ledit bloc lumineux 4 et un bloc batterie 6.

Le dispositif lumineux 5 est destiné à être employé dans une lampe, par exemple une lampe frontale, une lampe pour vélo ou une lampe de casque, par exemple pour la spéléologie, alpinisme...

Le dispositif lumineux peut être fixé de manière amovible et être facilement déplacé pour s'adapter sur un support présent sur une sangle d'une lampe frontale, sur un support de vélo ou sur un support présent sur un casque.

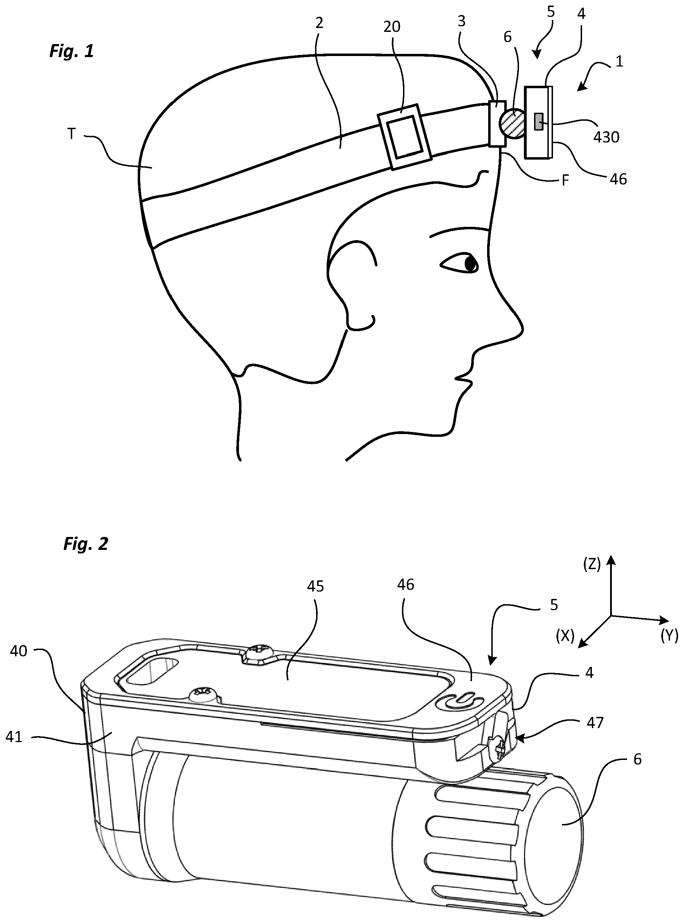

En référence à la figure 1 et à la figure 2, à titre d'exemple, une lampe frontale 1 se compose classiquement d'au moins trois éléments principaux :
- Une sangle 2 destinée à être placée autour de la tête T de l'individu porteur ; La sangle peut comporter des moyens de réglage 20 pour s'ajuster à la taille du tour de tête de l'individu.
- Un support 3 solidarisé à la sangle 2 et comprenant un dispositif de fixation d'un dispositif lumineux, destiné à être positionné contre le front F de l'individu ;
- Un dispositif lumineux 5 comprenant un bloc batterie 6 et un bloc lumineux 4 doté d'une source lumineuse pouvant comporter des diodes électroluminescentes 430 alimentées par la batterie du bloc batterie 6.

Pour la suite de la description, les termes "arrière" et "avant" sont à considérer en tenant compte de la fixation du dispositif lumineux 5 sur son support 3, ledit support étant situé à l'arrière et le dispositif lumineux 5 étant configuré pour émettre un faisceau lumineux vers l'avant. Un axe (Z) est défini dans la direction d'assemblage des pièces qui composent le bloc lumineux 4 du dispositif. Les pièces principales sont ainsi assemblées suivant plusieurs plans parallèles, perpendiculaires à cet axe (Z).

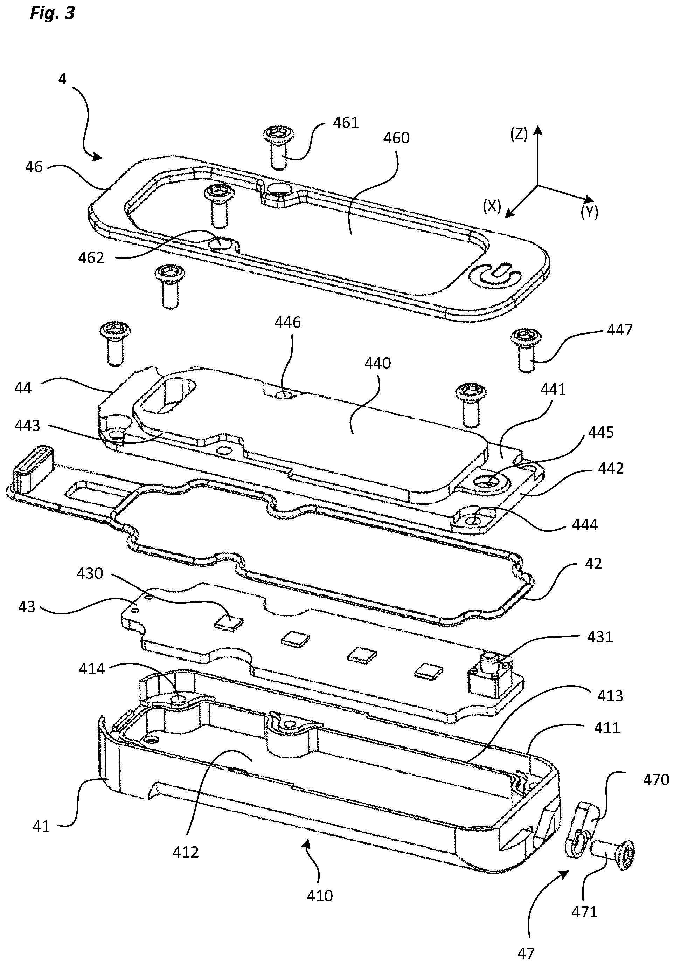

En référence à la figure 3, le bloc lumineux 4 comporte un boîtier 40 étanche.

Le boîtier 40 comporte avantageusement un socle arrière 41 et un couvercle venant se fixer sur le socle arrière 41 pour refermer ledit boîtier.

Le socle arrière 41 est avantageusement réalisé sous la forme d'une pièce monobloc en matériau métallique, par exemple en aluminium.

Le socle arrière 41 peut se présenter sous la forme d'une unique plaque comportant une face arrière 410 et une face avant 411. Sur sa face avant 411, la plaque comporte une empreinte formant un logement 412. Cette empreinte peut être réalisée par simple usinage. En périphérie de l'empreinte, sur sa face avant, le socle arrière 41 peut comporter une gorge 413. La plaque peut être percée sur son épaisseur de plusieurs trous axiaux 414, en périphérie de ladite gorge.

Le boîtier 40 comporte un joint d'étanchéité 42 agencé entre le socle arrière 41 et ledit couvercle pour étanchéifier la fixation du couvercle sur le socle arrière.

Le joint d'étanchéité 42 vient se positionner dans la gorge 413 du socle arrière 42.

Le bloc lumineux 4 comporte au moins une carte électronique 43 destinée à se positionner dans le logement 412 formé sur le socle arrière 42.

La carte électronique 43 comporte des composants électroniques nécessaires au fonctionnement du bloc lumineux, notamment la source lumineuse, avantageusement composée d'une ou plusieurs diodes électroluminescentes 430, et un circuit de contrôle de ladite source lumineuse, comprenant au moins un microcontrôleur chargé de gérer les différents modes d'éclairage du bloc lumineux. Le circuit de contrôle est par exemple configuré pour commander une ou plusieurs des diodes électroluminescentes 430 en fonction de l'intensité et/ou du type de faisceau demandés. La carte électronique peut bien entendu porter d'autres composants utiles à son fonctionnement et qui permettent éventuellement d'agir sur le faisceau généré, tels que des capteurs. Il pourra notamment s'agir de capteurs de type accéléromètre, capteur de luminosité...

Selon un aspect particulier de l'invention, le circuit de contrôle comporte un bouton de commande 431, avantageusement unique, dédié à la commande de la source lumineuse. Le bouton de commande 431 est connecté sur une entrée du microcontrôleur. Le bouton de commande 431 est de type bouton poussoir à rappel, de type monostable. Il est actionnable en translation suivant un axe parallèle à l'axe (Z), entre une position haute relâchée et une position basse instable. De manière avantageuse, chaque nouvelle pression sur ce bouton de commande est interprétée par le microcontrôleur, qui commande les diodes électroluminescentes 430 de manière adaptée pour changer le mode d'éclairage.

Selon une particularité de l'invention, tous les composants sont avantageusement placés sur une même face de la carte électronique, y compris les diodes électroluminescentes 430 et le bouton de commande 431. Cette face de support est orientée vers l'avant du bloc lumineux 4.

Selon un aspect particulier, le couvercle du boîtier comporte le bloc optique 44 du bloc lumineux 4.

Le bloc optique 44 comporte ainsi au moins une partie transparente 440, destinée à être traversée par un signal lumineux fourni par la source lumineuse logée dans ledit boîtier 40.

Le bloc optique 44 vient se placer à l'avant du socle arrière 41. Il comporte une face arrière 440 agencée pour venir se loger dans le socle arrière 41, sur la surface formée par la gorge 413 qui est située en périphérie de son logement 412, en écrasant le joint 42 et en refermant le logement 412 pour y enfermer la carte électronique 43.

Le bloc optique 44 peut être composé d'une simple pièce monobloc réalisée en matériau plastique, par exemple par moulage ou autre procédé de fabrication. Le bloc optique 44 comporte alors une ou plusieurs lentilles formées dans le bloc de matière. Le bloc optique 44 peut également être composé d'une plaque usinée (en plastique ou autre) pour former plusieurs logements dans lesquels sont insérées des lentilles standards, par exemple disponibles dans le commerce. Cette dernière solution offre notamment une grande flexibilité en termes de fabrication et permet de pouvoir facilement adapter et modifier le bloc optique 44.

Lorsque le bloc optique 44 est positionné et assemblé sur le socle arrière 41, chaque lentille du bloc est destinée à être positionnée en vis-à-vis d'une ou plusieurs des diodes électroluminescentes 430 de la source lumineuse. Chaque lentille est formée pour assurer la création des faisceaux en sortie du bloc lumineux.

Le bloc optique 44 comporte également une surface d'appui avant 441, réalisée sur le pourtour de ses lentilles et formant avantageusement un épaulement entre une partie arrière 442 et une avancée 443. Le bloc optique 44 comporte plusieurs trous axiaux 444 réalisés à travers l'épaisseur de sa partie arrière, en périphérie des lentilles et débouchant d'une part sur sa face arrière et d'autre part sur sa surface d'appui 441. Ses trous 444 sont positionnés pour coïncider avec les trous 414 réalisés à travers le socle arrière 41. Des vis 447 sont insérés dans les trous 444 du bloc optique et vissés dans les trous 414 du socle arrière 41 pour fixer le bloc optique 44 sur le socle arrière 41, en comprimant le joint d'étanchéité 42 entre les deux éléments.

Le bloc optique 44 peut également comporter un passage réalisé suivant l'axe Z, formant une empreinte de connexion pour un connecteur de recharge du bloc lumineux. Le connecteur est par exemple agencé sur la carte électronique 43 et rendu accessible de l'extérieur, par l'avant du bloc lumineux, via ce passage à travers son bloc optique 44.

Selon un aspect particulier de l'invention, le bloc optique 44 comporte un orifice 445 axial (selon l'axe (Z)), avantageusement réalisé à travers sa partie arrière 442, et le bouton de commande 431, suivant son axe de commande, traverse ledit orifice 445 pour émerger au-dessus de la face avant du bloc optique 44. Un joint torique (non représenté) peut être ajouté pour étanchéifier la liaison entre le bouton de commande 431 et le bloc optique 44, au niveau de l'orifice 445.

Selon l'invention, le bloc lumineux 4 comporte également une palette de commande 46 fixée sur la face avant du bloc optique.

La palette de commande se présente sous la forme d'une plaque rigide destinée à actionner le bouton de commande, par un principe de bras de levier.

La palette de commande est un élément fixé en porte à faux, disposant ainsi d'une unique zone de fixation (avec un ou plusieurs points de fixation - réalisée par exemple par l'intermédiaire de deux vis ou équivalents) et d'une partie libre en flexion située à l'opposé. La zone de fixation est positionnée du côté d'une extrémité de la plaque et de manière à ce que la plaque dispose à son extrémité opposée d'une partie libre en flexion, non fixée sur le bloc lumineux. La zone de fixation définit l'unique ancrage de la plaque.

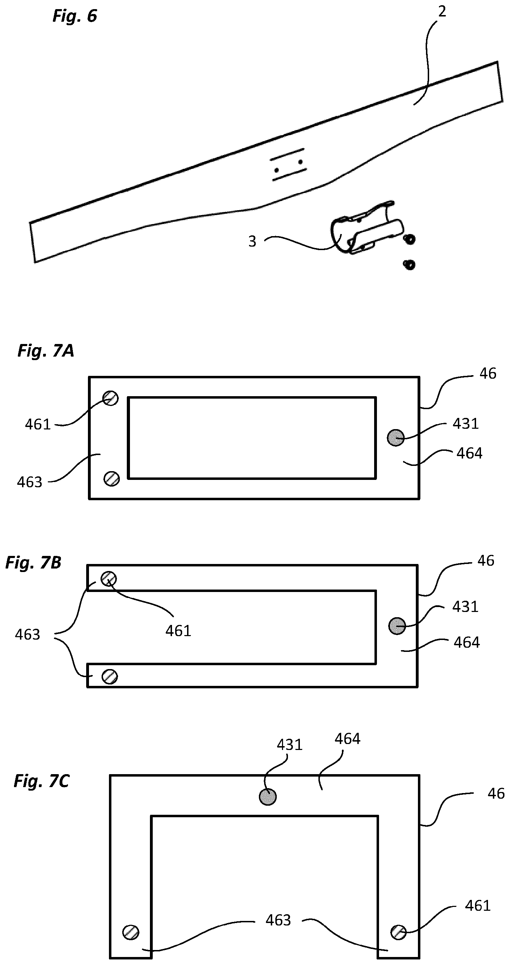

La plaque est par exemple allongée et s'étend suivant une direction dite longitudinale (axe (Y)) entre sa zone de fixation (463 - figures 7A à 7C) sur ledit bloc lumineux 4 et sa partie libre en flexion située à l'opposé de sa zone de fixation.

Selon un aspect particulier de l'invention, la plaque est dite "rigide" car elle permet de transférer un appui manuel contre sa partie de commande en un actionnement du bouton de commande. Elle est cependant légèrement déformable en flexion pour transférer son mouvement vers le bouton de commande, indéformable en traction, et indéformable en torsion. A titre d'exemple, elle peut se déformer en flexion sur quelques millimètres lors d'un appui manuel sur sa partie de commande et reprendre son état initial, après arrêt de la contrainte, ce qui la rend monostable. Sa rigidité s'oppose à celle d'un élément réalisé en caoutchouc ou en élastomère.

La palette de commande présente donc la particularité d'être actionnable en flexion autour de sa zone de fixation, formant un élément monostable, mobile entre une position de repos et une position dite fléchie. La flexion de la palette est permise autour d'un axe (X) perpendiculaire à l'axe (Z) et perpendiculaire à sa direction longitudinale (Y). La plaque est apte à fléchir sous l'effet d'une pression manuelle.

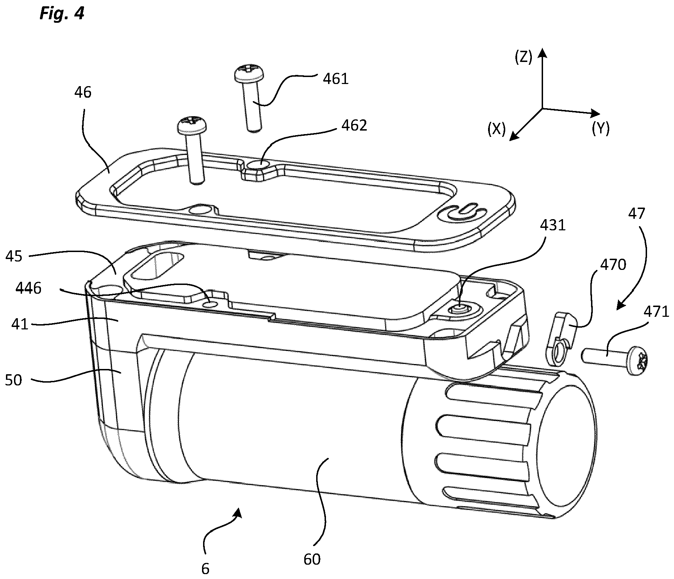

Par sa partie libre, dite partie de commande (464 - figures 7A à 7C), située à l'opposé de sa zone de fixation, la palette de commande coopère avec le bouton de commande 431, émergeant au-dessus du bloc optique 44 (voir par exemple figure 4). Cette partie de commande est une zone pleine de la palette de commande, par opposition à une zone évidée/ajourée/échancrée (voir différents modes de réalisation décrits ci-dessous) contournant ou décalée par rapport à la zone d'éclairage du bloc optique 44.

Lorsque la palette de commande 46 est fléchie, sa partie de commande vient presser le bouton de commande 431, qui émerge au-dessus de la face avant du bloc optique 44, vers sa position basse. Lorsque la pression sur la palette de commande 46 est relâchée, celle-ci revient dans sa position de repos, libérant le bouton de commande 431 qui est rappelé vers sa position haute. La flexion de la palette de commande 46 est réalisée sur une course très faible de quelques millimètres, suffisante pour actionner le bouton de commande 431.

La partie de commande 464 de la palette de commande 46 est avantageusement située la plus éloignée de sa zone de fixation, dans le sens de sa direction longitudinale (Y).

On peut noter que la zone de fixation de la palette de commande 46 est choisie pour définir l'étendue de la partie libre en flexion de la palette de commande 46 et sa course en flexion. Cette zone de fixation est par exemple située au niveau du premier tiers de la palette de commande 46 suivant sa direction longitudinale Y.

Par tapotement successif sur la palette de commande 46, qui est facilement accessible, il est ainsi aisé de passer d'un mode d'éclairage à un autre, en agissant sur le bouton de commande 431.

La palette de commande 46 peut être formée d'une pièce monobloc rigide, avantageusement réalisée en matériau de type composite, en aluminium ou équivalent.

Dans un mode de réalisation particulier illustré sur les figures 2 à 5B, cette palette de commande 46 se présente sous la forme d'une plaque rigide évidée formant une lunette positionnée à l'avant du bloc lumineux.

La palette de commande 46 est fixée sur la face avant du bloc optique, par exemple par l'intermédiaire de deux vis 461 venant s'insérer dans deux orifices 462 réalisées à travers la plaque formant la palette de commande 46 et se visser dans deux taraudages 446 correspondants du bloc optique 44. Bien entendu, d'autres solutions de fixation pourraient être envisagées. A l'opposé de la plaque, suivant la direction longitudinale Y, la plaque porte la partie de commande.

Son ouverture axiale 460, créée par l'évidement, est dessinée pour être avantageusement traversée par l'avancée 443 du bloc optique 44 et pour épouser le contour de ladite avancée 443.

On peut noter que la zone évidée de la palette de commande est choisie pour maintenir l'accès au connecteur de recharge du bloc lumineux.

La forme évidée de la palette de commande 46 est par exemple réalisée par usinage. L'usinage permet ainsi de découper la plaque en vue de retirer sa partie centrale et laisser une partie périphérique au contour fermé autour de l'évidement.

D'autres réalisations de la palette de commande peuvent être envisagés, tout en restant dans le même principe de fonctionnement décrit ci-dessus. Voici ci-dessous quelques autres solutions de réalisation envisageables :
- Une plaque ayant une forme en U, fixée sur le boîtier 40 du bloc lumineux par les deux extrémités libres du U, sa partie de commande 464 étant réalisée par sa branche centrale ;
- La plaque peut avoir sa direction longitudinale orientée à l'horizontale ou à la verticale ;
- La partie de commande 464 de la plaque peut se prolonger par une partie inclinée, par laquelle la palette 46 peut être actionnée manuellement ; Cette partie inclinée s'étend par exemple sur la tranche du bloc lumineux ;

Les figures 7A à 7C montrent quelques exemples de réalisation de la palette de commande 46. La figure 7A correspond à la forme des figures 2 à 5B. La figure 7B présente une forme en U à l'horizontale. La figure 7C montre une forme en U à la verticale. Sur ces figures, la zone de fixation 463 est matérialisée par les vis 461 et la partie de commande 464 de la palette est celle au-dessous de laquelle est placée le bouton de commande 431 (dont la position est montrée en grisé sur ces figures).

Selon un aspect particulier de l'invention, le bloc lumineux 4 comporte un dispositif de verrouillage 47 de l'actionnement de la palette de commande 46. Ce dispositif de verrouillage 47 est agencé pour bloquer la palette de commande 46 dans sa position de repos et éviter ainsi tout mouvement intempestif de la palette de commande et donc tout actionnement du bouton de commande 431.

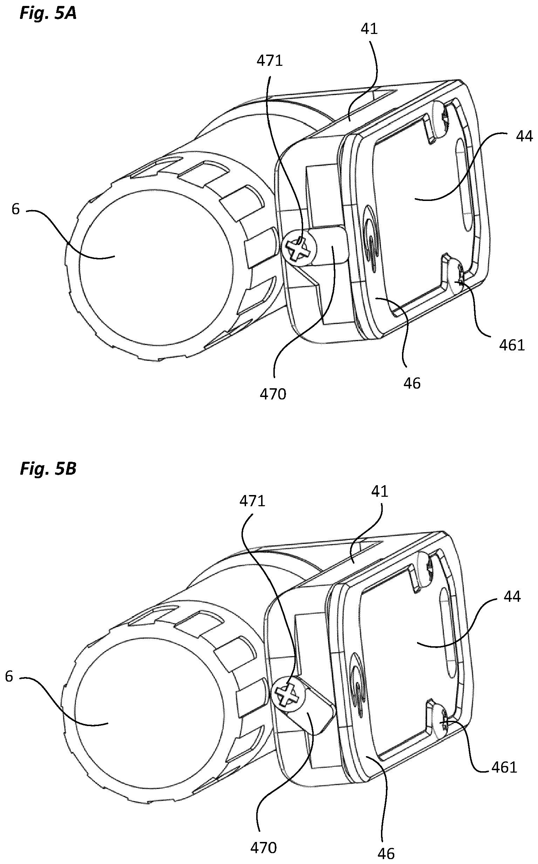

Ce dispositif de verrouillage 47 est par exemple composé d'un loquet 470, par exemple pivotant, monté sur le socle arrière et apte à prendre au moins deux positions distinctes :
- Une première position dans laquelle le loquet 470 bloque la palette de commande 46 dans sa position de repos (figure 5A), empêchant sa flexion et donc l'actionnement du bouton de commande 431 situé au-dessous ;
- Une deuxième position dans laquelle le loquet 470 libère la palette de commande 46 et lui permet de fléchir autour de son axe, permettant ainsi l'actionnement du bouton de commande (figure 5B) ;

Le loquet 470 est par exemple monté en pivotement sur une vis 471 insérée suivant la direction (Y) dans le socle arrière 41.

Bien entendu, le dispositif de verrouillage 47 pourrait être réalisé différemment. A titre d'exemple, il pourrait s'agir d'un curseur coulissant, ayant les mêmes fonctions que celles du loquet décrit ci-dessus. Il serait également possible d'imaginer un dispositif de verrouillage fonctionnant de manière électronique, par exemple via une séquence de verrouillage/déverrouillage appliquée à la palette de commande 46 et donc au bouton de commande 431, cette séquence étant interprétée par le microcontrôleur du circuit de contrôle.

Comme indiqué ci-dessus, le bloc lumineux 4 est associé à un bloc batterie 6 pour former un dispositif lumineux 5.

Le bloc batterie 6 comporte au moins une batterie, par exemple de type rechargeable.

Il faut noter que la batterie n'est avantageusement pas directement logée dans le boîtier 40 du bloc lumineux 4, celui-ci ne logeant que la carte électronique 43.

En référence à la figure 4, le bloc batterie 6 peut comporter une enveloppe 60, par exemple en matériau plastique ou métallique de type aluminium, délimitant un espace d'accueil dans lequel peut être placée une batterie. Cette enveloppe 60 est composée d'un réceptacle allongé, ouvert à une première extrémité pour laisser apparaître les contacts électriques de la batterie et fermé à l'autre extrémité par un bouchon refermable sur le réceptacle, par exemple par vissage. L'enveloppe 60 peut être de forme tubulaire pour accueillir des batteries de type 18650 ou 21700. Elle est fixée au bloc lumineux 4 par sa première extrémité, et sa deuxième extrémité, qui est fermée par le bouchon, est laissée libre, permettant ainsi une fixation par coulissement ou glissement.

En référence à la figure 4, le dispositif lumineux 5 peut comporter un unique bras de fixation 50 du bloc batterie 6. Ce bras 50 peut se présenter sous la forme d'un support fixé au boîtier 40 du bloc lumineux 4 et s'étendant dans un plan vertical perpendiculaire aux plans de superposition des pièces du bloc lumineux. Ce support porte un logement agencé pour accueillir le bloc batterie 6. Ce logement est orienté pour que le bloc batterie 40 s'étende, suivant son axe de révolution, selon une direction parallèle à la direction (Y).

L'enveloppe 60 du bloc batterie peut comporter à sa première extrémité un filetage externe pour se visser sur un filetage interne du logement de réception.

Le logement comporte avantageusement des contacts électriques sur lesquels viennent se connecter les contacts électriques de la batterie, lorsque l'enveloppe 60 est vissée dans le logement. Le bras peut intégrer des moyens de liaison électrique reliant ces contacts électriques à des points de connexion électrique de la carte électronique 43 du bloc lumineux 4.

Il faut noter que le bloc batterie 6 peut comporter une unité d'extension, destinée à relier le bloc lumineux 4 à une batterie déportée. Cette unité d'extension peut se présenter sous la forme d'un boîtier identique à l'enveloppe 60, vissé dans le logement et portant une liaison électrique agencée pour relier électriquement les contacts électriques présents dans le logement à une batterie déportée, via une liaison flexible, par exemple un câble électrique. La batterie peut être placée dans un sac porté par l'individu.

En référence à la figure 6, le dispositif lumineux 5 peut être fixé de manière amovible sur un support 3.

Le support peut être fixé à une sangle 2 d'une lampe frontale, au cintre d'un vélo ou à un casque, par exemple un casque de spéléologie, d'alpinisme.

De manière non limitative, le support 3 peut coopérer avec le dispositif lumineux par l'intermédiaire du bloc batterie 6.

Le support peut comporter des moyens de fixation par emboîtement ou par coulissement agencés pour coopérer avec l'enveloppe 60 dudit bloc batterie 6. Ces moyens de fixation peuvent comporter une pièce à section circulaire non fermée, formant une pince non articulée et déformable, sur laquelle vient se fixer par emboîtement ou par coulissement le boîtier du bloc batterie.

La solution de l'invention présente ainsi l'avantage d'une commande aisée, grâce à la palette de commande 46 facilement accessible sur l'avant du bloc lumineux 4 et facilement manipulable, même avec des gants.

La forme ajourée/échancrée de la palette de commande 46 participe au design du bloc lumineux 4 en venant se positionner en périphérie de la partie transparente 440 du bloc optique 44.

La palette de commande 46 permet de transmettre la commande du bloc lumineux 4 au bouton de commande 431, par tapotement axial (selon l'axe (Z)), et sa forme ajourée/échancrée permet au signal lumineux émis à travers le bloc optique 44 de se diffuser vers l'extérieur.

Les dimensions (longueur, largeur, épaisseur) de la palette de commande 46, le matériau utilisé et la distance suivant la direction (Y) entre la partie de commande de la palette de commande et l'axe (X), ainsi que sa forme ajourée/échancrée, permettent de conférer à la plaque ses propriétés de flexion mécanique. Le mouvement de flexion de la palette de commande 46 est réalisé sur une faible amplitude, la partie de commande située à l'opposé de sa zone de fixation se déplaçant sur une course de quelques millimètres seulement, par exemple de 0.2mm à 1mm environ. La course d'actionnement en translation du bouton de commande 431 est bien entendu adaptée à la course de flexion de la palette de commande 46. Il faut noter que la course de la palette de commande 46 est choisie pour ne pas être supérieure à la course du bouton de commande 431, ceci afin d'éviter toute dégradation du bouton de commande 431 en cas d'appui trop marqué sur la palette de commande 46. Dans le cas de l'invention, la butée mécanique de pression sur la palette de commande 46 est définie par rapport au boîtier et non par la fin de course d'actionnement du bouton de commande 431, tout en conservant une amplitude de course suffisante pour permettre l'actionnement du bouton de commande 431. Par ailleurs, il faut noter que le fait de disposer d'une amplitude de commande la plus faible possible au niveau du bouton de commande 431 permet de diminuer les contraintes d'étanchéité au niveau du bouton.

## Revendications

1. Bloc lumineux (4) pour dispositif lumineux (5) d'une lampe, comprenant :
- Un boîtier (40) étanche comprenant une face avant présentant une partie transparente (440),
- Une source lumineuse logée dans le boîtier et agencée pour émettre un signal lumineux à travers ladite partie transparente (440) dudit boîtier,
- Un circuit de contrôle de la source lumineuse, logé dans le boîtier et comprenant au moins un bouton de commande (431) de la source lumineuse,
**Caractérisé en ce que** :
- Le boîtier (40) comporte au moins un orifice (445) réalisé sur sa face avant et traversé par ledit bouton de commande (431),
- Le bloc lumineux (4) comporte une palette de commande (46) fixée audit boîtier (40), actionnable en mouvement entre deux positions et coopérant avec ledit bouton de commande (431) pour l'actionner dans au moins l'une de ses deux positions,
- La palette de commande (46) comporte au moins une plaque fixée en porte à faux qui s'étend suivant une direction dite longitudinale entre une zone de fixation sur la face dudit boîtier (40) du bloc lumineux (4) et une partie de commande libre en flexion éloignée de sa zone de fixation et positionnée en vis-à-vis dudit bouton de commande.

2. Bloc lumineuse selon la revendication 1, **caractérisé en ce que** ladite plaque comporte une ouverture (460) délimitée par un contour fermé formant une lunette positionnée à l'avant du bloc lumineux, ledit contour fermé étant agencé autour de ladite partie transparente (440) du boîtier pour laisser passer le signal lumineux.

3. Bloc lumineux selon la revendication 1 ou 2, **caractérisé en ce que** le bouton de commande (431) est un bouton poussoir à rappel.

4. Bloc lumineux selon l'une des revendications 1 à 3, **caractérisé en ce qu'**il comporte un dispositif de verrouillage (47) de ladite palette de commande (46).

5. Bloc lumineux selon la revendication 4, **caractérisé en ce que** le dispositif de verrouillage (47) comporte un loquet (470) mobile entre une position de déverrouillage du mouvement de la palette de commande (46) et une position de verrouillage du mouvement de la palette de commande (46).

6. Bloc lumineux selon l'une des revendications 1 à 5, **caractérisé en ce que** le boîtier (40) comporte un socle arrière (41) et un bloc optique (44) portant ladite partie transparente (440) et fixé audit socle arrière (41) pour refermer ledit boîtier (40), un joint d'étanchéité (42) étant agencé entre ledit socle arrière et ledit bloc optique.

7. Bloc lumineux selon l'une des revendications 1 à 6, **caractérisé en ce que** le circuit de contrôle est réalisé sur une carte électronique (43) logée dans ledit boîtier.

8. Bloc lumineux selon la revendication 7, **caractérisé en ce que** la source lumineuse comporte une ou plusieurs diodes électroluminescentes (430) montées sur ladite carte électronique (43).

9. Dispositif lumineux (5) comprenant un bloc batterie (6) sur lequel vient se connecter une batterie, **caractérisé en ce qu'**il comporte un bloc lumineux (4) tel que défini dans l'une des revendications 1 à 8 et des moyens de fixation dudit bloc batterie (6) sur ledit bloc lumineux (4).

10. Dispositif lumineux selon la revendication 9, **caractérisé en ce que** les moyens de fixation du bloc batterie comportent un bras (50) fixé au boîtier dudit bloc lumineux (4), ledit bras portant un logement d'accueil pour le bloc batterie (6).

11. Dispositif lumineux selon la revendication 10, **caractérisé en ce que** le logement d'accueil comporte un filetage interne et **en ce qu'**une enveloppe (60) du bloc batterie (6) comporte un filetage externe agencé pour assurer un vissage de l'enveloppe sur le bras (60).

12. Lampe frontale (1) comportant une sangle (2) destinée à être placée autour de la tête d'un individu et un support (3) agencé sur ladite sangle et configuré pour accueillir un dispositif lumineux (5), **caractérisé en ce que** le dispositif lumineux est tel que défini dans l'une des revendications 9 à 11.

13. Lampe frontale selon la revendication 12, **caractérisée en ce que** le support comporte des moyens de fixation par emboîtement ou par coulissement agencés pour coopérer avec l'enveloppe (60) du bloc batterie (6).

14. Lampe pour vélo, comprenant un support agencé pour se fixer sur le cintre d'un vélo et destiné à recevoir un dispositif lumineux, **caractérisé en ce que** le dispositif lumineux est tel que défini dans l'une des revendications 9 à 11.

15. Lampe de casque comportant un support agencé pour se fixer sur un casque et destinée à recevoir un dispositif lumineux, **caractérisé en ce que** le dispositif lumineux est tel que défini dans l'une des revendications 9 à 11.
